# FASCICULE DE BREVET EUROPEEN

(11) **EP 4 120 104 B1**
(45) Date de publication et mention de la délivrance du brevet: **24.12.2025**
(21) Numéro de dépôt: 22184433.5
(22) Date de dépôt: 12.07.2022
(51) Int. Cl.: G06F 21/31, G06F 21/36

(54) **PROCEDE POUR GENERER UN DOCUMENT NUMERIQUE D'IDENTITE D'UN INDIVIDU A PARTIR D'UN DOCUMENT PHYSIQUE D'IDENTITE OFFICIEL**
VERFAHREN ZUR ERZEUGUNG EINES DIGITALEN IDENTITÄTSDOKUMENTS EINER PERSON AUS EINEM PHYSISCHEN AMTLICHEN IDENTITÄTSDOKUMENT
METHOD FOR GENERATING A DIGITAL IDENTITY DOCUMENT OF AN INDIVIDUAL FROM A PHYSICAL OFFICIAL IDENTITY DOCUMENT

(30) Priorité: 16.07.2021 FR 2107680
(43) Date de publication de la demande: 18.01.2023
(73) Titulaire: Imprimerie Nationale, 75116 Paris (FR)
(72) Inventeur: AUCHERE, Sylvain, 78140 VELIZY-VILLACOUBLAY (FR); MALBOROUGT, Jean-Noël, 78140 VELIZY-VILLACOUBLAY (FR)
(74) Mandataire: Brun, Philippe Alexandre Georges

(56) Documents cités:
- EP-A1- 3 257 222
- US-A1- 2018 060 874
- US-B1- 10 826 900

## Description

### Domaine technique

La présente invention concerne un procédé pour générer un document numérique d'identité, un appareil mobile adapté pour afficher le document numérique d'identité, une application mobile exécutée par ledit appareil mobile ainsi qu'un dispositif pour générer le document numérique d'identité.

### Technique antérieure

Il est connu de générer pour un individu un document numérique d'identité à partir d'un document physique d'identité officiel, tel qu'une carte d'identité ou un passeport. Ce document numérique d'identité est adapté pour être affiché sur un appareil mobile pour une authentification de l'individu par un tiers physique de contrôle. Ce tiers physique de contrôle est, par exemple, un agent des forces de l'ordre, un douanier, ou un agent d'aéroport.

Le document numérique d'identité constitue ainsi un double du document physique d'identité officiel. Ce double est plus simple à manipuler car il est directement accessible via l'écran d'affichage de l'appareil mobile. Ce document numérique peut ainsi comprendre une photo de l'individu ainsi que données d'identification complémentaires telles qu'un nom, prénom, adresse, etc. Dans un cas particulier, le document numérique d'identité est une copie conforme de la carte d'identité de l'individu.

Le tiers physique de contrôle peut alors contrôler le document numérique d'identité via un équipement spécial ou une application particulière, ce qui nécessite des investissements de contrôle complémentaires. En variante, le tiers physique de contrôle peut contrôler le document numérique d'identité visuellement. Bien que plus simple, cette méthode de contrôle peut être faussée par des mécanismes de manipulation d'image (copie d'écran, etc.) dans le but de tromper le tiers physique de contrôle.

Le document US2018060874 divulgue un procédé de génération d'un permis de conduire numérique. Les permis de conduire sont couramment utilisés pour vérifier l'identité d'un individu, notamment aux Etats-Unis. Ces permis de conduire donnent ainsi accès à des zones restreintes pour autoriser un individu à acheter du contenu particulier ou pour autoriser cet individu à accéder aux ressources informatiques en réseau. Ces vérifications comprennent souvent à la fois une vérification de la validité du permis de conduire et une vérification de l'identité de celui qui présente ce permis de conduire. Dans ce document US2018060874, le permis de conduire numérique est généré à partir de données d'un serveur d'identification et d'une pluralité de photographies prises par un appareil photographique. Les photographies sont ensuite traitées par triangulation 3D pour former une image 3D composite. La génération du permis de conduire numérique est alors complexe car elle nécessité l'acquisition d'un grand nombre de photos et l'utilisation de données d'identification de l'individu stockées dans un serveur adapté.

Dans le document US10826900B1 le serveur créé une image 3D et l'appareil mobile remplace l'image de l'utilisateur par une autre image correspondante au mouvement du téléphone.

Il existe donc un besoin de proposer un procédé de génération d'un document numérique d'identité qui soit simple et pratique à mettre en œuvre et qui permette une présentation rapide dudit document numérique d'identité auprès d'un tiers physique de contrôle.

### Exposé de l'invention

La présente invention vise à remédier au moins en partie à ce besoin.

Plus particulièrement, la présente invention a pour objectif de faciliter l'utilisation d'un document numérique d'identité lors d'un contrôle d'identité par un tiers physique de contrôle.

Pour cela un premier objet de l'invention concerne un procédé pour générer un document numérique d'identité d'un individu à partir d'un document physique d'identité officiel. Le document numérique d'identité est une reproduction partielle ou totale dudit document physique d'identité officiel. Le document physique d'identité officiel comprend une photographie de l'individu. Le document numérique d'identité est destiné à être stocké sur un appareil mobile. Le procédé comprend une étape d'extraction de la photographie de l'individu à partir du document d'identité physique officiel, dite photographie extraite. Le procédé comprend également une étape d'acquisition d'une photographie dudit individu à partir d'un élément optique de l'appareil mobile, dite photographie acquise. Le procédé comprend également une étape d'envoi de la photo extraite et de la photo acquise en vue de générer un hologramme comprenant une pluralité de couches d'image. Le procédé comprend également une étape de réception de la pluralité de couches d'image générées pour ledit hologramme, chaque couche d'image étant dérivée de la photo acquise ou de la photo extraite, chaque couche d'image étant associée à une valeur d'au moins un paramètre de l'appareil mobile. A un instant t, le procédé comprend une étape d'affichage du document numérique d'identité sur l'appareil mobile, ledit document numérique d'identité affichant la photo extraite et une couche d'image sélectionnée parmi la pluralité de couches d'image en fonction de la valeur du paramètre de l'appareil mobile audit instant t, une autre couche d'image de la pluralité de couches d'image étant sélectionnée et affichée à un instant t+1 si la valeur du paramètre de l'appareil mobile est modifiée.

Ainsi à chaque modification de la valeur du paramètre en question, la couche d'image affichée va changer dans le document numérique d'identité, donnant à ce dernier une plus grande valeur en matière d'authenticité pour un tiers physique de contrôle. Le procédé permet alors d'apporter un premier niveau de sécurité en empêchant les falsifications simples de type copie d'écran, ou copie vidéo.

Dans un mode de réalisation particulier, la couche d'image recouvre au moins en partie la photo extraite.

Dans un mode de réalisation particulier, le paramètre de l'appareil mobile est sélectionné parmi une liste de paramètres comprenant au moins :
- une accélération d'un mouvement de l'appareil mobile ;
- une inclinaison de l'appareil mobile ;
- une luminosité ambiante autour de l'appareil mobile ;
- une direction magnétique de l'appareil mobile ;
- une bruit ambiant autour de l'appareil mobile ;
- une altitude GPS de l'appareil mobile.

Dans un mode de réalisation particulier, l'étape d'extraction de la photographie est réalisée par une capture vidéo via l'élément optique de l'appareil mobile ou l'étape d'extraction de la photographie est réalisée par une lecture sans contact d'une puce électronique contenue dans le document physique d'identité officiel.

Dans un mode de réalisation particulier, le procédé comprend une étape de comparaison entre la photo extraite et la photo acquise pour déterminer si ladite photo extraite et ladite photo acquise concernent un même individu en vue de déclencher la génération de l'hologramme.

Dans un mode de réalisation particulier, la génération de l'hologramme comprend :
- une étape de détection d'une tête de l'individu sur la photo acquise ou la photo extraite ;
- une étape de détourage de la tête dudit individu de sorte à obtenir une photo détourée ;
- une étape de traitement de la photo détourée selon un filtre particulier, tel qu'un filtre de luminosité, un filtre de variation, un filtre de couleur ou un masque, pour obtenir une couche d'image de l'hologramme ;
- un étape d'association de la couche d'image avec une valeur d'un paramètre du téléphone mobile, l'étape de traitement et l'étape d'association étant répétées n fois pour la génération de la pluralité de couches d'image de l'hologramme, avec n un entier supérieur à 1.

Dans un mode de réalisation particulier, le document numérique d'identité comprend des éléments de sécurité supplémentaires par rapport au document physique d'identité officiel.

Un autre objet de l'invention concerne un appareil mobile comprenant :
- une antenne ;
- une interface utilisateur ;
- des moyens de stockage de données ;
- des moyens de traitement des données ;
- des moyens de détermination d'un paramètre dudit appareil mobile, l'appareil mobile étant configuré pour mettre en œuvre tout ou partie des étapes du procédé pour générer un document numérique d'identité d'un individu selon l'objet précédent.

Un autre objet de l'invention concerne une application mobile pour générer un document numérique d'identité d'un individu, ladite application mobile conduisant un appareil mobile selon un des objets précédents à mettre en œuvre, au moins en partie, le procédé pour générer un document numérique d'identité d'un individu selon un autre objet précédent, lorsque ladite application mobile est exécutée sur ledit appareil mobile.

Un autre objet de l'invention concerne une dispositif pour générer un document numérique d'identité d'un individu à partir d'un document physique d'identité officiel, ledit document physique d'identité officiel comprenant une photographie dudit individu, ledit dispositif comprenant :
- un appareil mobile apte à transmettre une photo de l'individu extraite du document d'identité physique officiel et une photo de l'individu acquise à partir d'un élément optique de l'appareil mobile ;
- un serveur de sécurité apte à comparer la photo extraite et la photo acquise pour déterminer si lesdites photos concernent un même individu ;
- un serveur de traitement apte à générer une pluralité de couches d'image d'un d'hologrammes dérivées de la photo acquise ou de la photo extraite, chaque couche d'image de l'hologramme étant associée à une valeur d'au moins un paramètre de l'appareil mobile, ledit dispositif étant adapté pour mettre en œuvre un procédé pour générer le document numérique d'identité de l'individu selon un des objets précédents, ledit document numérique d'identité étant stocké dans l'appareil mobile.

La présente invention sera mieux comprise à la lecture de la description détaillée de modes de réalisation pris à titre d'exemples nullement limitatifs et illustrés par les dessins annexés sur lesquels :

[Fig 1] la figure 1 illustre un dispositif pour générer un document numérique d'identité selon l'invention ;

[Fig 2] la figure 2 illustre l'affichage du document numérique d'identité généré par le dispositif de la figure 1, dans une première position de l'appareil mobile ;

[Fig 3] la figure 3 illustre l'affichage du document numérique d'identité généré par le dispositif de la figure 2, dans une seconde position de l'appareil mobile ;

[Fig 4] la figure 4 illustre les étapes d'un procédé pour générer un document numérique d'identité, lesdites étapes étant mises en œuvre par le dispositif de la figure 1.

L'invention n'est pas limitée aux modes de réalisation et variantes présentées et d'autres modes de réalisation et variantes apparaîtront clairement à l'homme du métier.

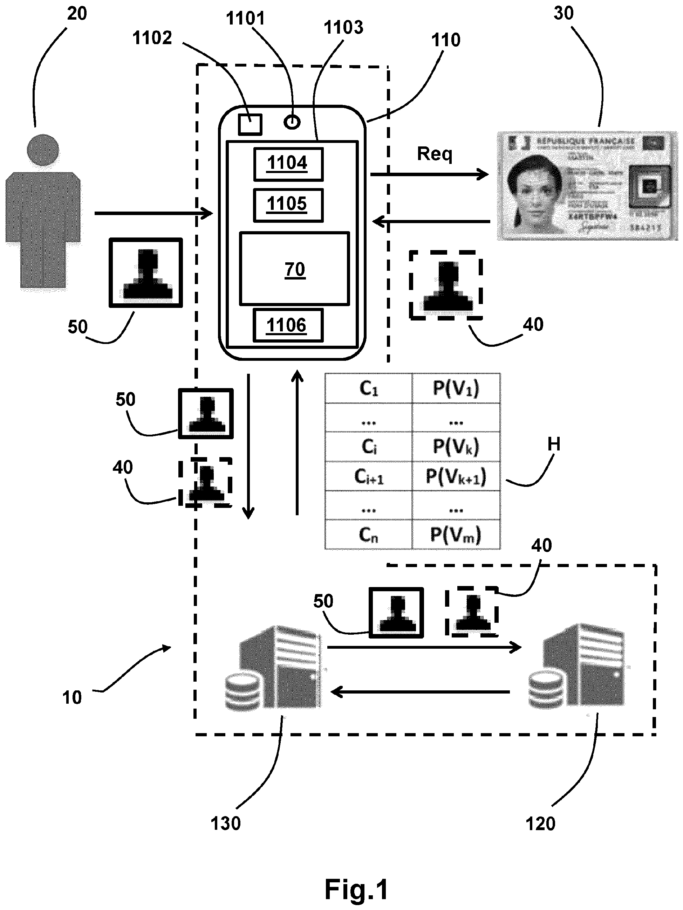

La figure 1 illustre un dispositif 10 pour générer un document numérique d'identité 70 d'un individu 20.

Le dispositif 10 comprend :
- un appareil mobile 110 ;
- un serveur de sécurité 120 ;
- un serveur de traitement 130 ;

L'appareil mobile 110 comprend :
- un élément optique 1101 ;
- une antenne 1102 ;
- une interface utilisateur 1103 ;
- des moyens de stockage de données 1104 ;
- des moyens de traitement des données 1105 ;
- des moyens de détermination d'un paramètre 1106.

L'élément optique 1101 est un appareil photo et/ou une caméra vidéo qui permet d'acquérir une photographie de l'individu, dite photographie acquise 50. Cette acquisition a lieu, par exemple, au cours d'un selfie.

L'antenne 1102 permet à l'appareil mobile 110 de communiquer avec le serveur de sécurité 120 et le serveur de traitement 130. Cette antenne 1102 est compatible avec les réseaux de communications actuels tels qu'un réseau 4G, un réseau 5G ou un réseau WIFI. En variante, l'antenne 1102 est une antenne NFC (pour « Near Field Communication » en anglais).

L'interface utilisateur 1103 est adaptée pour afficher le document numérique d'identité 70 afin que celui-ci soit visible par un tiers physique de contrôle.

Les moyens de stockage de données 1104 sont adaptés pour stocker le document numérique d'identité 70 ainsi qu'une pluralité de couches d'image C₁, ..., Cᵢ, ... Cₙ de l'hologramme H généré.

Les moyens de traitement 1105 sont adaptés pour extraire une photographie de l'individu 20 à partir d'un document physique d'identité officiel 30, dite photographie extraite 40.

Les moyens de détermination d'un paramètre 1106 sont adaptés pour déterminé un paramètre de l'appareil mobile 110. Ces moyens sont, par exemple, un microphone pour déterminer un bruit ambiant autour de l'appareil mobile 110 ou un gyroscope pour déterminer une inclinaison de l'appareil mobile 110 ou un baromètre pour déterminer la pression atmosphérique autour de l'appareil mobile 110 ou un magnétomètre pour déterminer une direction magnétique de l'appareil mobile 110 ou un détecteur de lumière pour déterminer une luminosité ambiante autour de l'appareil mobile 110 ou un accéléromètre pour déterminer une accélération d'un mouvement de l'appareil mobile 110 ou un GPS pour déterminer une altitude de l'appareil mobile 110.

Le serveur de sécurité 120 est apte à recevoir la photographie extraite 40 et la photo acquise 50. Ce serveur de sécurité 120 effectue une reconnaissance faciale en comparant les deux photos 40, 50. Il détermine ainsi si ces deux photographies concernent le même individu 20. Si ces deux photos 40, 50 concernent un même individu un message positif OK est transmis au serveur de traitement 130. Dans le cas contraire, un message négatif NOK est transmis à ce serveur de traitement 130.

Le serveur de traitement 130 est apte à recevoir la photo extraite 40 et la photo acquise 50 provenant de l'appareil mobile 110. Il transmet ensuite ces photos au serveur de sécurité 120 pour analyse. A la réception d'un message OK provenant du serveur de sécurité 120, le serveur de traitement 130 est apte à générer un hologramme H. Cet hologramme H est composé d'une pluralité de couches d'image C₁, ..., Cᵢ, ..., Cₙ dérivées de la photo acquise 50 ou de la photo extraite 40. Plus particulièrement, les couches d'image de l'hologramme H, sont obtenues à partir d'un traitement de la photo acquise ou de la photo extraite par un filtre particulier, tel qu'un filtre de luminosité, un filtre de variation, un filtre de couleur ou un masque. Ces couches d'image C₁, ..., Cᵢ, ..., Cₙ sont associées à des valeurs Vₖ d'au moins un paramètre P de l'appareil mobile 110 pour constituer des couples de données, avec k un entier naturel compris entre 1 et m. Le paramètre P utilisé est par exemple une accélération d'un mouvement de l'appareil mobile 110. En variante, le paramètre P est une inclinaison de l'appareil mobile 110. Dans une autre variante, le paramètre P est une luminosité ambiante autour de l'appareil mobile 110. On notera que le serveur de traitement 130 possède une interface de programmation dite API (pour « Application Programming Interface » dédiée. L'ensemble des couches d'image de l'hologramme H sont transmises à l'appareil mobile 110 avec des valeurs Vₖ de paramètres P associés pour y être stockés.

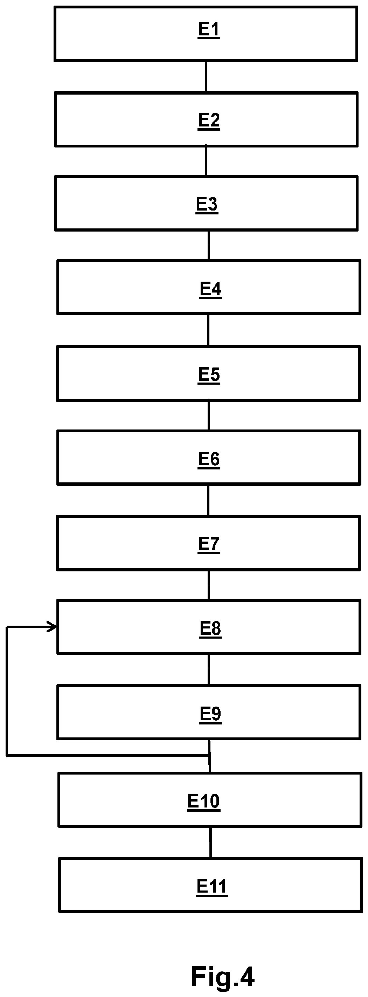

La figure 4 illustre plus particulièrement les étapes d'un procédé pour générer un document numérique d'identité à partir des éléments du dispositif 10.

Ce procédé comprend une première étape E1 d'extraction de la photographie de l'individu 20 à partir du document d'identité physique officiel 30. Cette étape E1 d'extraction est réalisée par une capture vidéo via l'élément optique 1101. En variante, l'étape E1 est réalisée par une lecture sans contact d'une puce électronique contenue dans le document physique d'identité officiel 30. Cette lecture se fait, par exemple, à l'aide de la technologie NFC (pour « Near Field Communication » en anglais) au cours d'une requête Req.

Dans une seconde étape E2, la photographie acquise 50 est obtenue à partir de l'élément optique 1101 de l'appareil mobile 110.

Dans une troisième étape E3, la photo extraite 40 et la photo acquise 50 sont envoyées vers le serveur de traitement 130. Celui-ci transmets ensuite ces photos 40, 50 au serveur de sécurité 120 dans une quatrième étape E4.

Dans une cinquième étape de comparaison E5, le serveur de sécurité 120 compare la photo extraite 40 et la photo acquise 50 pour déterminer si ces photos concernent le même individu 20. En fonction du résultat de cette comparaison, le message positif OK ou le message négatif NOK est transmis au serveur de traitement 130.

Si le message positif OK est transmis au serveur de traitement 130, celui-ci effectue la génération d'un hologramme H. Pour cela, dans une étape de détection E6, la tête de l'individu 20 est identifiée sur la photo acquise 50 ou sur la photo extraite 40. Dans une étape de détourage E7, cette tête de l'individu 20 est détourée de sorte à obtenir une photo détourée comportant uniquement la tête de l'individu 20 sans un fond. Dans une étape E8, la photo détourée est traitée selon un filtre particulier, tel qu'un filtre de luminosité, un filtre de variation, un filtre de couleur ou un masque pour obtenir une image traitée correspondant à une couche d'image Cᵢ de l'hologramme H. Cet effet de luminosité, variation ou couleur est dépendant d'un paramètre physique P du téléphone mobile 110 prédéfini (orientation, mouvement, etc.). Dans une étape d'association E9, la couche d'image Cᵢ est associée avec une valeur Vₖ de ce paramètre physique P pour créer un couple image dérivée de la photo extraite 40 ou de la photo acquise 50 et le paramètre physique P associé. L'étape de traitement E8 et l'étape d'association E9 sont répétées n fois pour générer une pluralité de couches d'image associées respectivement à une valeur Vₖ d'un paramètre physique P, avec n un entier naturel supérieur à 1.

Dans une étape E10, les couples couches d'image Cᵢ et valeurs Vₖ d'un paramètre physique P sont reçus par l'appareil mobile 110 et stockés dans les moyens de stockage de données 1104.

Dans une étape E11, l'appareil mobile 110 affiche le document numérique d'identité 70.

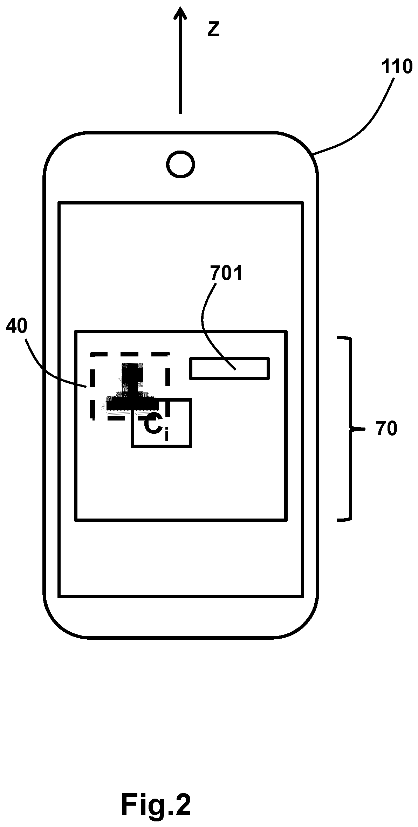

Un tel document numérique d'identité 70 est illustré à la figure 2. Ce document numérique d'identité 70 comprend la photo extraite 40, la couche d'image Cᵢ de l'hologramme H et des informations d'identité 701 de l'individu 20 telles que le nom, prénom, adresse etc. La couche d'image Cᵢ recouvre ici en partie la photo extraite 40. Le paramètre physique P utilisé ici est l'inclinaison de l'appareil mobile selon un axe Z. L'axe Z s'étend dans la longueur de l'appareil mobile 110. Sur cette figure 2, l'inclinaison de l'appareil à l'instant t par rapport à cet axe Z est nulle et la couche d'image Cᵢ correspond à la photo extraite 40 ou à la photo acquise 50 sans le fond et avec uniquement la tête.

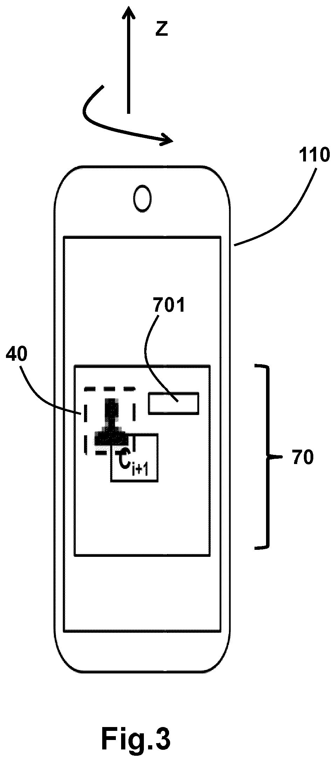

Sur la figure 3, l'appareil mobile est incliné par rapport à l'axe Z d'un angle d'inclinaison non nul, à un instant t+1. Le document numérique d'identité 70 comprend la photo extraite 40, une couche d'image Cᵢ₊₁ de l'hologramme H et les informations d'identité 701 de l'individu 20. La couche d'image Cᵢ₊₁ recouvre en partie la photo extraite 40, de la même manière que la couche d'image Cᵢ. La couche d'image Cᵢ₊₁ correspond à la valeur Vₖ₊₁ du paramètre physique d'inclinaison P selon l'axe Z. Cette couche d'image Cᵢ₊₁ se distingue de la couche d'image Cᵢ par une luminosité, une variation ou une couleur. Ainsi, lorsque l'utilisateur inclinera son appareil mobile 110 devant un tiers physique de contrôle, ce dernier pourra constater que l'affichage de l'appareil n'est pas figé mais évolue avec l'inclinaison. Les couches d'image Cᵢ et Cᵢ₊₁ constituent des éléments visuels vérifiables, comme pour un document physique d'identité officiel.

On notera que les couches d'image Cᵢ et Cᵢ₊₁ stockées dans les moyens de stockage de données 1104, sont sélectionnées à partir de paramètres physiques renvoyés par des capteurs présents dans l'appareil mobile 110, tels qu'un accéléromètre ou un gyroscope.

Préférentiellement, le document numérique d'identité 70 comprend des éléments de sécurité supplémentaires par rapport au document physique d'identité officiel 30, tels que des éléments de sécurité digitaux. Ce document numérique d'identité 70 constitue alors un véritable double numérique pour l'individu 20.

L'invention concerne également une application mobile pour générer un document numérique d'identité 70 d'un individu 20. Cette application est présente dans l'appareil mobile 110 et elle a été préalablement téléchargée à partir d'une plateforme dédiée. L'application mobile est adaptée pour mettre en œuvre une partie des étapes du procédé de la figure 4. Plus particulièrement, cette application mobile est adaptée pour mettre en œuvre les étapes suivantes :
- l'étape E1 d'extraction de la photographie de l'individu 20 à partir du document d'identité physique officiel 30 ;
- l'étape d'acquisition E2 de la photographie dudit individu 20 à partir de l'élément optique 1101 de l'appareil mobile 110 ;
- l'étape E3 d'envoi de la photo extraite 40 et de la photo acquise 50 en vue de générer la pluralité de couches d'image de l'hologramme H ;
- l'étape de réception E10 de la pluralité de couches d'image générées ;
- à l'instant t, l'étape E11 d'affichage du document numérique d'identité 70 sur l'appareil mobile 110, ledit document numérique d'identité affichant la photo extraite 40 et une couche d'image Cᵢ sélectionnée parmi la pluralité de couches d'image C₁, ..., Cᵢ, ..., Cₙ en fonction de la valeur Vₖ du paramètre P de l'appareil mobile 110. Un autre couche d'image Cᵢ₊₁ de la pluralité e couches d'image C₁, ..., Cᵢ, ..., Cₙ étant sélectionnée et affichée à un instant t+1 si la valeur du paramètre de l'appareil mobile 110 est modifiée.

L'invention permet de fournir un système qui à partir d'un document physique (avec ou sans puce) permet de dériver une identité numérique en générant un élément visuel, type hologramme qui est ensuite inscrit dans le visuel d'un double numérique.

Elle permet d'établir un niveau de confiance suffisant (dépendant de l'usage) pour permettre l'utilisation d'un double numérique.

Elle permet de proposer un élément de sécurité digital innovant sur un titre digital personnalisé avec la photo du porteur associé à une technologie holographique de type Holo ID numérique.

Elle permet de proposer un élément de sécurité physique digital qui n'est pas présent sur le titre physique mais généré par d'autres éléments sécuritaires et biométriques du titre physique.

Elle permet de se différencier d'autres offres présentes dans le domaine du titre digital.

Elle propose une expérience différente aux décideurs politique, facile à présenter pour accompagner leur stratégie de digitalisation.

Elle fiabilise l'émission et le contrôle d'un double numérique avec éléments de contrôle Niveau 1 sur un titre digital facilement identifiable tout en étant difficile à reproduire.

Elle propose des composants de sécurité digitaux uniques.

Elle est applicable à de multiples cas d'enrôlement (mobile, site web, ...) sans matériel spécifique.

Le serveur de traitement envoie des couples résultant à l'application mobile qui enregistre et associe facilement les éléments aux propriétés du double numérique. Ainsi, lorsque le double numérique est présenté, cette application mobile affiche dans ce double numérique les images dérivées par le serveur de traitement en fonction de propriétés physiques des couples et de paramètres physiques renvoyés par des capteurs (accéléromètre, gyroscope) de l'appareil mobile. L'invention permet ainsi de générer un double numérique animé en fonction de ces paramètres physiques.

L'invention n'est pas limitée aux modes de réalisation et variantes présentées et d'autres modes de réalisation et variantes apparaîtront clairement à l'homme du métier.

## Revendications

1. Procédé pour générer un document numérique d'identité (70) d'un individu (20) à partir d'un document physique d'identité officiel (30), ledit document numérique d'identité (30) étant une reproduction partielle ou totale dudit document physique d'identité officiel (30), ledit document physique d'identité officiel (30) comprenant une photographie de l'individu (20), ledit document numérique d'identité (70) étant destiné à être stocké sur un appareil mobile (110), ledit procédé comprenant les étapes suivantes mises en œuvre dans ledit appareil mobile (110) :
- une étape (E1) d'extraction de la photographie de l'individu (20) à partir du document d'identité physique officiel (30), dite photographie extraite (40) ;
- une étape d'acquisition (E2) d'une photographie dudit individu (20) à partir d'un élément optique (1101) de l'appareil mobile (110), dite photographie acquise (50) ;
- une étape (E3) d'envoi de la photo extraite (40) et de la photo acquise (50) vers un serveur de traitement (130), en vue de générer un hologramme (H) comprenant une pluralité de couches d'image (C₁, ...,Cᵢ, ..., Cₙ) ;
- une étape de réception (E10) de la pluralité de couches d'image (C₁, ...,Cᵢ, ..., Cₙ) générées pour ledit hologramme (H), chaque couche (Cᵢ) d'image étant dérivée de la photo acquise (50) ou de la photo extraite (40), chaque couche d'image (Cᵢ) étant associée à une valeur (Vₖ) d'un paramètre (P) de l'appareil mobile (110) ;
- à un instant t, une étape (E11) d'affichage du document numérique d'identité (70) sur l'appareil mobile (110), ledit document numérique d'identité affichant la photo extraite (40) et une couche d'image (Cᵢ) sélectionnée parmi la pluralité de couches d'image (C₁, ...,Cᵢ, ..., Cₙ) en fonction de la valeur (Vₖ) du paramètre (P) de l'appareil mobile (110) audit instant t, une autre couche d'image (Cᵢ₊₁) de la pluralité de couches d'image (C₁, ... ,Cᵢ, ..., Cₙ) étant sélectionnée et affichée à un instant t+1 si la valeur du paramètre de l'appareil mobile (110) est modifiée.

2. Procédé pour générer un document numérique d'identité (70) selon la revendication 1, dans lequel la couche d'image (Cᵢ) recouvre au moins en partie la photo extraite (40).

3. Procédé pour générer un document numérique d'identité (70) selon l'une quelconque des revendications 1 à 2, dans lequel le paramètre (P) de l'appareil mobile (110) est sélectionné parmi une liste de paramètres comprenant au moins :
- une accélération d'un mouvement de l'appareil mobile (110) ;
- une inclinaison de l'appareil mobile (110) ;
- une luminosité ambiante autour de l'appareil mobile (110) ;
- une direction magnétique de l'appareil mobile ;
- un bruit ambiant autour de l'appareil mobile ;
- une altitude du GPS de l'appareil mobile.

4. Procédé pour générer un document numérique d'identité (70) selon l'une quelconque des revendications 1 à 3, dans lequel l'étape (E1) d'extraction de la photographie est réalisée par une capture vidéo via l'élément optique (1101) de l'appareil mobile (110) ou dans lequel l'étape (E1) d'extraction de la photographie est réalisée par une lecture sans contact d'une puce électronique contenue dans le document physique d'identité officiel (30).

5. Procédé pour générer un document numérique d'identité (70) selon l'une quelconque des revendications 1 à 4, ledit procédé comprenant une étape de comparaison (E5) entre la photo extraite (40) et la photo acquise (50) pour déterminer si ladite photo extraite (40) et ladite photo acquise (50) concernent un même individu (20) en vue de déclencher la génération de l'hologramme (H) par ledit serveur de traitement (130), ladite étape (E5) étant mise en œuvre dans un serveur de sécurité (120).

6. Procédé pour générer un document numérique d'identité (70) selon l'une quelconque des revendications 1 à 5, dans lequel la génération de l'hologramme (H) mise en œuvre dans le serveur de traitement (120) comprend :
- une étape (E6) de détection d'une tête de l'individu (20) sur la photo acquise (50) ou la photo extraite (40) ;
- une étape (E7) de détourage de la tête dudit individu (20) de sorte à obtenir une photo détourée ;
- une étape (E8) de traitement de la photo détourée selon un filtre particulier, tel qu'un filtre de luminosité, un filtre de variation, un filtre de couleur ou un masque, pour obtenir une couche d'image (Cᵢ) de l'hologramme (H) ;
- un étape d'association (E9) de la couche d'image (Cᵢ) avec une valeur (V_{K}) d'un paramètre (P) du téléphone mobile (110), l'étape de traitement (E8) et l'étape d'association (E9) étant répétées n fois pour la génération de la pluralité de couches d'image (C₁, ...,Cᵢ, ..., Cₙ) de l'hologramme, avec n un entier supérieur à 1.

7. Procédé pour générer un document numérique d'identité (70) selon l'une quelconque des revendications 1 à 6, dans lequel le document numérique d'identité (70) comprend des éléments de sécurité supplémentaires par rapport au document physique d'identité officiel (30), tels que des éléments de sécurité digitaux.

8. Appareil mobile comprenant :
- une antenne (1102) ;
- une interface utilisateur (1103) ;
- des moyens de stockage de données (1104) ;
- des moyens de traitement des données (1105) ;
- des moyens de détermination (1106) d'un paramètre (P) dudit appareil mobile (110), l'appareil mobile (110) étant configuré pour mettre en œuvre tout ou partie des étapes du procédé pour générer un document numérique d'identité (70) d'un individu (20) selon l'une quelconque des revendications 1 à 4.

9. Application mobile pour générer un document numérique d'identité (70) d'un individu (20), ladite application mobile conduisant un appareil mobile (110) selon la revendication 8 à mettre en œuvre, au moins en partie, le procédé pour générer un document numérique d'identité (70) d'un individu (20) selon l'une quelconque des revendications 1 à 4, lorsque ladite application mobile est exécutée sur ledit appareil mobile (110).

10. Dispositif pour générer un document numérique d'identité (70) d'un individu (20) à partir d'un document physique d'identité officiel (30), ledit document physique d'identité officiel (30) comprenant une photographie dudit individu (20), ledit dispositif (10) comprenant :
- un appareil mobile (110) apte à transmettre une photo de l'individu (20) extraite (40) à partir du document d'identité physique officiel (30) et une photo de l'individu (20) acquise (50) à partir d'un élément optique (1101) de l'appareil mobile (110) ;
- un serveur de sécurité (120) apte à comparer la photo extraite (40) et la photo acquise (50) pour déterminer si lesdites photos concernent un même individu (20) ;
- un serveur de traitement (130) apte à générer une pluralité de couches d'image (C₁, ..., Cᵢ, ..., Cₙ) d'un d'hologramme (H) dérivées de la photo acquise (50) ou de la photo extraite (40), chaque couche d'image (Cᵢ) de l'hologramme (H) étant associée à une valeur (V_{K}) d'au moins un paramètre (P) de l'appareil mobile (110), ledit dispositif (10) étant adapté pour mettre en œuvre un procédé pour générer le document numérique d'identité (70) de l'individu (20) selon l'une quelconque des revendications 1 à 7, ledit document numérique d'identité (70) étant stocké dans l'appareil mobile (110).

## Patentansprüche

1. Verfahren zum Generieren eines digitalen Ausweisdokuments (70) einer Person (20) aus einem offiziellen physischen Ausweisdokument (30), wobei das digitale Ausweisdokument (30) eine teilweise oder vollständige Reproduktion des offiziellen physischen Ausweisdokuments (30) ist, das offizielle physische Ausweisdokument (30) umfassend ein Foto der Person (20), wobei das digitale Ausweisdokument (70) zum Speichern auf einem mobilen Gerät (110) bestimmt ist, das Verfahren umfassend die folgenden Schritte, die in dem mobilen Gerät (110) durchgeführt werden:
- einen Schritt (E1) zum Extrahieren des Fotos der Person (20) aus dem offiziellen physischen Ausweisdokument (30), das als extrahiertes Foto (40) bezeichnet wird;
- einen Schritt (E2) zum Erfassen eines Fotos der Person (20) aus einem optischen Element (1101) des mobilen Geräts (110), das als erfasstes Foto (50) bezeichnet wird;
- einen Schritt (E3) zum Senden des extrahierten Fotos (40) und des erfassten Fotos (50) an einen Verarbeitungsserver (130), um ein Hologramm (H), umfassend eine Vielzahl von Bildschichten (C₁, ..., Cᵢ, ..., Cₙ), zu generieren;
- einen Schritt zum Empfangen (E10) der Vielzahl von Bildschichten (C₁, ..., Cᵢ, ..., Cₙ), die für das Hologramm (H) generiert wurden, wobei jede Bildschicht (Cᵢ) von dem erfassten Foto (50) oder dem extrahierten Foto (40) abgeleitet ist, wobei jede Bildschicht (Cᵢ) einem Wert (Vₖ) eines Parameters (P) des mobilen Geräts (110) zugeordnet ist;
- zu einem Zeitpunkt t, einen Schritt (E11) zum Anzeigen des digitalen Ausweisdokuments (70) auf dem mobilen Gerät (110), wobei das digitale Ausweisdokument das extrahierte Foto (40) und eine Bildschicht (Cᵢ) anzeigt, die aus der Vielzahl von Bildschichten (C₁, ..., Cᵢ, ..., Cₙ) in Abhängigkeit von dem Wert (Vₖ) des Parameters (P) des mobilen Geräts (110) zu dem Zeitpunkt t ausgewählt wird, wobei eine andere Bildschicht (Cᵢ₊₁) der Vielzahl von Bildschichten (C₁, ..., Cᵢ, ..., Cₙ) ausgewählt und zu einem Zeitpunkt t+1 angezeigt wird, wenn der Wert des Parameters des mobilen Geräts (110) geändert wird.

2. Verfahren zum Generieren eines digitalen Ausweisdokuments (70) nach Anspruch 1, wobei die Bildschicht (Cᵢ) das extrahierte Foto (40) mindestens teilweise überdeckt.

3. Verfahren zum Generieren eines digitalen Ausweisdokuments (70) nach einem der Ansprüche 1 bis 2, wobei der Parameter (P) des mobilen Geräts (110) aus einer Parameterliste ausgewählt wird, umfassend mindestens:
- eine Beschleunigung einer Bewegung des mobilen Geräts (110);
- eine Neigung des mobilen Geräts (110);
- eine Umgebungshelligkeit um das mobile Gerät (110);
- eine magnetische Richtung des mobilen Geräts;
- ein Umgebungsgeräusch um das mobile Gerät;
- eine Höhe des GPS des mobilen Geräts.

4. Verfahren zum Generieren eines digitalen Ausweisdokuments (70) nach einem der Ansprüche 1 bis 3, wobei der Schritt (E1) zum Extrahieren des Fotos durch eine Videoaufnahme über das optische Element (1101) des mobilen Geräts (110) umgesetzt wird oder wobei der Schritt (E1) zum Extrahieren des Fotos durch kontaktloses Auslesen eines im offiziellen physischen Ausweisdokument (30) enthaltenen elektronischen Chips umgesetzt wird.

5. Verfahren zum Generieren eines digitalen Ausweisdokuments (70) nach einem der Ansprüche 1 bis 4, das Verfahren umfassend einen Schritt (E5) zum Vergleichen des extrahierten Fotos (40) mit dem erfassten Foto (50), um zu bestimmen, ob das extrahierte Foto (40) und das erfasste Foto (50) dieselbe Person (20) betreffen, um das Generieren des Hologramms (H) durch den Verarbeitungsserver (130) auszulösen, wobei der Schritt (E5) auf einem Sicherheitsserver (120) durchgeführt wird.

6. Verfahren zum Generieren eines digitalen Ausweisdokuments (70) nach einem der Ansprüche 1 bis 5, wobei das auf dem Verarbeitungsserver (120) durchgeführte Generieren des Hologramms (H) umfasst:
- einen Schritt (E6) zum Erkennen eines Kopfes der Person (20) auf dem erfassten Foto (50) oder dem extrahierten Foto (40);
- einen Schritt (E7) zum Ausschneiden des Kopfes der Person (20), um ein ausgeschnittenes Foto zu erhalten;
- einen Schritt (E8) zum Verarbeiten des ausgeschnittenen Fotos gemäß einem bestimmten Filter, beispielsweise einem Helligkeitsfilter, einem Variationsfilter, einem Farbfilter oder einer Maske, um eine Bildschicht (Cᵢ) des Hologramms (H) zu erhalten;
- einen Schritt (E9) zum Zuordnen der Bildschicht (Cᵢ) zu einem Wert (V_{K}) eines Parameters (P) des Mobiltelefons (110), wobei der Verarbeitungsschritt (E8) und der Zuordnungsschritt (E9) zum Generieren der Vielzahl von Bildschichten (C₁, ...,Cᵢ, ...,Cₙ) des Hologramms n-mal wiederholt werden, wobei n eine ganze Zahl größer als 1 ist.

7. Verfahren zum Generieren eines digitalen Ausweisdokuments (70) nach einem der Ansprüche 1 bis 6, wobei das digitale Ausweisdokument (70) im Vergleich zum offiziellen physischen Ausweisdokument (30) zusätzliche Sicherheitselemente, wie digitale Sicherheitselemente, umfasst.

8. Mobiles Gerät, umfassend:
- eine Antenne (1102);
- eine Benutzeroberfläche (1103);
- Datenspeichermittel (1104);
- Datenverarbeitungsmittel (1105);
- Mittel (1106) zum Bestimmen eines Parameters (P) des mobilen Geräts (110), wobei das mobile Gerät (110) konfiguriert ist, um alle oder einen Teil der Schritte des Verfahrens zum Generieren eines digitalen Ausweisdokuments (70) einer Person (20) nach einem der Ansprüche 1 bis 4 durchzuführen.

9. Mobile Anwendung zum Generieren eines digitalen Ausweisdokuments (70) einer Person (20), wobei die mobile Anwendung ein mobiles Gerät (110) nach Anspruch 8 dazu veranlasst, mindestens teilweise das Verfahren zum Generieren eines digitalen Ausweisdokuments (70) einer Person (20) nach einem der Ansprüche 1 bis 4 durchzuführen, wenn die mobile Anwendung auf dem mobilen Gerät (110) ausgeführt wird.

10. Vorrichtung zum Generieren eines digitalen Ausweisdokuments (70) einer Person (20) aus einem offiziellen physischen Ausweisdokument (30), das offizielle physische Ausweisdokument (30) umfassend ein Foto der Person (20), die Vorrichtung (10) umfassend:
- ein mobiles Gerät (110), das geeignet ist, ein aus dem offiziellen physischen Ausweisdokument (30) extrahiertes (40) Foto der Person (20) und ein von einem optischen Element (1101) des mobilen Geräts (110) erfasstes (50) Foto der Person (20) zu übermitteln;
- einen Sicherheitsserver (120), der geeignet ist, das extrahierte Foto (40) und das erfasste Foto (50) zu vergleichen, um zu bestimmen, ob die Fotos dieselbe Person (20) betreffen;
- einen Verarbeitungsserver (130), der geeignet ist, eine Vielzahl von Bildschichten (C₁, ..., Cᵢ, ..., Cₙ) eines Hologramms (H) zu generieren, die aus dem erfassten Foto (50) oder dem extrahierten Foto (40) abgeleitet sind, wobei jede Bildschicht (Cᵢ) des Hologramms (H) einem Wert (V_{K}) mindestens eines Parameters (P) des mobilen Geräts (110) zugeordnet ist, wobei die Vorrichtung (10) geeignet ist, ein Verfahren zum Generieren des digitalen Ausweisdokuments (70) der Person (20) nach einem der Ansprüche 1 bis 7 durchzuführen, wobei das digitale Ausweisdokument (70) in dem mobilen Gerät (110) gespeichert ist.

## Claims

1. Method for generating a digital identity document (70) of an individual (20) from an official physical identity document (30), the digital identity document (30) being a partial or total reproduction of the official physical identity document (30), the official physical identity document (30) comprising a photograph of the individual (20), the digital identity document (70) being intended to be stored on a mobile apparatus (110), the method comprising the following steps implemented in the mobile apparatus (110):
- a step (E1) of extracting the photograph of the individual (20) from the official physical identity document (30), referred to as the extracted photograph (40);
- a step (E2) of acquiring a photograph of the individual (20) from an optical element (1101) of the mobile apparatus (110), referred to as the acquired photograph (50);
- a step (E3) of sending the extracted photo (40) and the acquired photo (50) to a processing server (130), in order to generate a hologram (H) comprising a plurality of image layers (C₁, ..., Cᵢ, ..., Cₙ);
- a step (E10) of receiving the plurality of image layers (C₁, ..., Cᵢ, ..., Cₙ) generated for the hologram (H), each image layer (Cᵢ) being derived from the acquired photo (50) or the extracted photo (40), each image layer (Cᵢ) being associated with a value (Vₖ) of a parameter (P) of the mobile apparatus (110);
- at a time t, a step (E11) of displaying the digital identity document (70) on the mobile apparatus (110), the digital identity document displaying the extracted photo (40) and an image layer (Cᵢ) selected from the plurality of image layers (C₁, ..., Cᵢ, ..., Cₙ) depending on the value (Vₖ) of the parameter (P) of the mobile apparatus (110) at the time t, another image layer (Cᵢ₊₁) of the plurality of image layers (C₁, ..., Cᵢ, ..., Cₙ) being selected and displayed at a time t+1 if the value of the parameter of the mobile apparatus (110) is modified.

2. Method for generating a digital identity document (70) according to claim 1, wherein the image layer (Cᵢ) at least partially covers the extracted photo (40).

3. Method for generating a digital identity document (70) according to any of claims 1 to 2, wherein the parameter (P) of the mobile apparatus (110) is selected from a list of parameters comprising at least:
- an acceleration of a movement of the mobile apparatus (110);
- a tilt of the mobile apparatus (110);
- ambient brightness around the mobile apparatus (110);
- a magnetic direction of the mobile apparatus;
- ambient noise around the mobile apparatus;
- an altitude from the GPS of the mobile apparatus.

4. Method for generating a digital identity document (70) according to any of claims 1 to 3, wherein the photograph extraction step (E1) is performed by video capture via the optical element (1101) of the mobile apparatus (110) or wherein the photograph extraction step (E1) is performed by contactless reading of an electronic chip contained in the official physical identity document (30).

5. Method for generating a digital identity document (70) according to any of claims 1 to 4, the method comprising a comparison step (E5) between the extracted photo (40) and the acquired photo (50) to determine whether the extracted photo (40) and the acquired photo (50) relate to the same individual (20) in order to trigger the generation of the hologram (H) by the processing server (130), the step (E5) being implemented in a security server (120).

6. Method for generating a digital identity document (70) according to any of claims 1 to 5, wherein the generation of the hologram (H) implemented in the processing server (120) comprises:
- a step (E6) for detecting a head of the individual (20) on the acquired photo (50) or the extracted photo (40);
- a step (E7) of clipping the head of the individual (20) so as to obtain a clipped photo;
- a step (E8) of processing the clipped photo according to a particular filter, such as a luminosity filter, a variation filter, a color filter or a mask, in order to obtain an image layer (Cᵢ) of the hologram (H);
- a step (E9) of associating the image layer (Cᵢ) with a value (Vₖ) of a parameter (P) of the mobile phone (110), the processing step (E8) and the association step (E9) being repeated n times for generating the plurality of image layers (C₁, ..., Cᵢ, ..., Cₙ) of the hologram, with n being an integer greater than 1.

7. Method for generating a digital identity document (70) according to any of claims 1 to 6, wherein the digital identity document (70) comprises additional security features compared to the official physical identity document (30), such as digital security features.

8. Mobile apparatus comprising:
- an antenna (1102);
- a user interface (1103);
- data storage means (1104);
- data processing means (1105);
- means (1106) for determining a parameter (P) of the mobile apparatus (110), the mobile apparatus (110) being configured to implement all or part of the steps of the method for generating a digital identity document (70) of an individual (20) according to any of claims 1 to 4.

9. Mobile application for generating a digital identity document (70) of an individual (20), the mobile application causing a mobile apparatus (110) according to claim 8 to implement, at least in part, the method for generating a digital identity document (70) of an individual (20) according to any of claims 1 to 4, when the mobile application is executed on the mobile apparatus (110).

10. Device for generating a digital identity document (70) of an individual (20) from an official physical identity document (30), the official physical identity document (30) comprising a photograph of the individual (20), the device (10) comprising:
- a mobile apparatus (110) capable of transmitting a photo of the individual (20) extracted (40) from the official physical identity document (30) and a photo of the individual (20) acquired (50) from an optical element (1101) of the mobile apparatus (110);
- a security server (120) capable of comparing the extracted photo (40) and the acquired photo (50) to determine whether the photos relate to the same individual (20);
- a processing server (130) capable of generating a plurality of image layers (C₁, ..., Cᵢ, ..., Cₙ) of a hologram (H) derived from the acquired photo (50) or the extracted photo (40), each image layer (Cᵢ) of the hologram (H) being associated with a value (Vₖ) of at least one parameter (P) of the mobile apparatus (110), the device (10) being adapted to implement a method for generating the digital identity document (70) of the individual (20) according to any of claims 1 to 7, the digital identity document (70) being stored in the mobile apparatus (110).
